# EUROPÄISCHE PATENTSCHRIFT

(11) **EP 2 085 136 B1**
(45) Veröffentlichungstag und Bekanntmachung des Hinweises auf die Patenterteilung: **21.12.2011**
(21) Anmeldenummer: 08006979.2
(22) Anmeldetag: 08.04.2008
(51) Int. Cl.: B01J 8/00

(54) **Inertgasschleuse zur Befüllung eines Behälters mit Schüttgut**
Inert gas lock for filling a container with bulk material
Dispositif de remplissage d'un récipient avec des materiaux en vrac

(30) Priorität: 29.01.2008 DE 102008006558
(43) Veröffentlichungstag der Anmeldung: 05.08.2009
(73) Patentinhaber: Linde AG, 80331 München (DE)
(72) Erfinder: Himmen, Hans-Rudolf, 85778 Haimhausen (DE)

(56) Entgegenhaltungen:
- EP-A- 0 318 656
- BE-A- 534 515
- DE-A1-102004 008 395
- DE-C- 815 640
- DE-C- 862 296
- US-A- 3 217 364
- US-A- 3 840 155

## Beschreibung

Die Erfindung betrifft eine Gasschleuse mit einem zylindermantelförmigen Grundkörper, welcher in der Öffnung eines mit Schüttgut befüllbaren Behälters befestigt wird und dessen Querschnitt im Wesentlichen dem Querschnitt der Öffnung des Behälters entspricht, sowie einer Gaszuführung und mindestens einem mit der Gaszuführung strömungsseitig verbundenen Gasauslass.

In der chemischen Industrie werden häufig Behälter, wie z.B. Reaktoren und Mischer, eingesetzt, in denen eine inerte Atmosphäre aufrechterhalten werden muss. Dies ist beispielsweise zur Vermeidung unerwünschter Oxidationsreaktionen nötig. Nicht immer ist es dabei verfahrensbedingt möglich, das zu inertisierende Volumen komplett und dauerhaft zu verschließen. Insbesondere beim Befüllten der Behälter oder beim Einbringen von Zusatzstoffen besteht die Gefahr, dass mit den Zusatzstoffen auch Umgebungsluft in den Behälter eingezogen wird.

Es ist bereits bekannt, zum Schutz vor Oxidationen oder Explosionen den Luftsauerstoff durch Inertgase aus dem Behälter zu verdrängen. Hierzu wird beispielsweise auf die Behälteröffnung eine Schleuse mit einer Durchlassöffnung (Gasschleuse) aufgesetzt. In die Durchlassöffnung der Schleuse wird dabei Inertgas eingespeist und so eine inerte Pufferschicht erzeugt. Derartige Gasschleusen sind bereits im Stand der Technik bekannt.

In der deutschen Offenlegungsschrift DE2613310 werden ein Verfahren und eine Vorrichtung zum Einspeisen fester Produkte in einen Reaktionsbehälter offenbart. Die Eintragungseinrichtung besteht hier im Wesentlichen aus einem Trichter mit sich anschließenden, diffusorartig geformten Fallrohr. Im Übergangsbereich zwischen Trichter und Fallrohr sind Düsen angeordnet, im Trichter befinden sich Inertgasentspannungseinrichtungen. Die Anordnung der Düsen und Inertgasentspannungseinrichtungen ist derart, dass der Strahl mindestens einer Düse eine Komponente in Richtung des Reaktionsbehälters und der Strahl mindestens einer Düse eine entgegengesetzt gerichtete Komponente aufweist. Der Behälter weist eine Entlüftungsleitung mit einer Saugdüse auf.

DE3914783 offenbart eine Vorrichtung zur Verhinderung des Eindringens von Fremdgasen durch die Beschickungsöffnung eines inertisierten Reaktionsbehälters. Die hier offenbarte Gasschleuse besteht aus einem Mantelrohr und einem Innenrohr, welche einen Spalt bilden und auf der Beschickungsöffnung angeordnet sind. In diesen Spalt münden mit Inertgas beaufschlagte Düsen. Vor dem Austrittsquerschnitt des Spaltes befindet sich ein Umlenkblech, welches die Inertgasströmung zur Rohrachse hin richtet. Dadurch soll eine Sperre gegen das Eindringen von Fremdgasen errichtet werden.

DE102004008395 offenbart eine Inertgasschleuse bei der ein verstellbare Verschlusskörper vorgesehen ist, der eine Änderung des freien Strömungsquerschnitts für das aus dem Gasauslass austretende Gas erlaubt. Die hier offenbarte Gasschleuse ist im Wesentlichen ein ringförmiger Schleusengrundkörper, durch den eine Durchlassöffnung begrenzt wird. Der Verschlusskörper wird als L-förmiger Ring ausgeführt, der mit dem Schleusengrundkörper verbunden und relativ zu diesem verstellbar ist. Der senkrechte Schenkel des L-förmigen Rings wird auf der Außenseite des Schleusengrundkörpers positioniert, während sich dessen waagerechter Schenkel unterhalb des Schleusengrundkörpers befindet. Der waagerechte Schenkel ist soweit in Richtung der Schleusenachse gezogen, dass die auf der Unterseite des Schleusengrundkörpers befindlichen Austrittsöffnungen abgedeckt sind. Aus den Austrittsöffnungen austretendes Gas wird durch den L-förmigen Ring radial nach Innen in Richtung der Durchlassöffnung abgelenkt, wobei die ausströmende Gasmenge durch Vergrößerung bzw. Verkleinerung des Spaltes zwischen dem Ring und dem Schleusengrundkörper beeinflusst werden kann.

DE102004008395 offenbart noch eine zweite Ausführungsform einer Gasschleuse. In dieser Ausführungsform erfolgt die Zufuhr des Gases über zwei aufeinander gesetzte Kegel im Zentrum der Durchlassöffnung. Unter Zentrum wird hier ein Bereich verstanden, der maximal 30 % der Durchlassfläche einnimmt. Auch in dieser Ausführungsform der Erfindung kann die Gasmenge durch die Variation des Spaltes zwischen den beiden Kegeln eingestellt werden.

DE862296 offenbart Verfahren zum Betrieb der Schleuse zum Eintragen von Adsorptionsmittel od. dgl. in einen Behandlungsraum oder aus einem Behandlungsraum in einen anderen oder zum Austragen von Adsorptionsmittel aus einem Behandlungsraum nach DE815640, dadurch gekennzeichnet, dass vor dem Schliessen der Verschlüsse, die die beiden Schleusenkammern voneinander oder die untere Schleusenkammer von einen darunterliegenden Raum trennen, die Verschlussorgane, insbesondere deren dichtende Flächen, mittels eines dampf- oder gasförmigen Mittels rein geblasen werden. Ebenso wird eine Schleuse zur Durchführung des Verfahrens offenbart.

In den bisher im Stand der Technik bekannten Gasschleusen wird das Inertgas im Wesentlichen horizontal in die Durchlassöffnung für das Schüttgut eingeströmt. Der größte Teil der Fläche der Durchlassöffnung der Gasschleusen nach dem Stand der Technik wird für das Schüttgut offen gehalten. Keine der beschriebenen Gasschleusen weist ein Mittel zum Verschluss der Durchlassöffnung für das Schüttgut oder eine Regulierung für die pro Zeit in den Behälter einströmende Menge Schüttgut auf. Die Inertisierung des Behälters wird im Wesentlichen durch eine Inertgassperrschicht im Durchgang der Schleuse aufrecht erhalten. Das Schüttgut muß diese Inertgassperrschicht ebenfalls passieren, wodurch in der Inertgassperrschicht Verwirbelungen auftreten und ihre Funktion beeinträchtigt wird.

Der vorliegenden Erfindung liegt daher die Aufgabe zugrunde, eine Gasschleuse derart auszugestalten, dass die nahezu gasdicht verschließbar ist und die in den Behälter einströmende Menge von Schüttgut reguliert werden kann, wobei eine möglichst geringe Verunreinigung der Behälteratmosphäre gewährleistet werden soll.

Die vorliegende Aufgabe wird dadurch gelöst, dass die Gasschleuse am unteren Ende zylindermantelförmigen Grundkörpers Mittel aufweist, die geeignet sind die Behälteröffnung nahezu gasdicht zu verschließen, die in den Behälter eindringende Menge Schüttgut und Gas zu regulieren und derart ausgestaltet sind, dass sich ein Gasstrom in Richtung des in den Behälter strömenden Schüttgutes ausbildet.

Erfindungsgemäß wird am unteren Ende des zylindermantelförmigen Grundkörpers ein Mittel eingebracht, welches geeignet ist, die Befüllöffnung nahezu gasdicht zu verschließen. Dadurch ist es möglich, das Einfüllvolumen der Gasschleuse bereits vor der Befüllung mit Schüttgut weitestgehend zu inertisieren, und dabei den Behälter verschlossen zu halten. Gemäß des Erfindungsgedankens ist das Mittel zum Verschluß der Gasschleuse am unteren Ende des zylindermantelförmigen Grundkörpers derart ausgebildet, dass das Schüttgut ebenso wie das Inertgas entlang des Mittels in den Behälter gelangt beziehungsweise strömt. Das Mittel zum Verschluß dient dabei auch der Regulation der in den Behälter gelangenden Inertgas- und Schüttgutmenge. Durch das gleichzeitig und gleichgerichte Eintreten von Inertgas und Schüttgut in den Behälter gelingt eine deutlich verbesserte Aufrechterhaltung der Inertisierung des Behälters. Das Mittel zum Verschluß der Gasschleuse am unteren Ende des zylindermantelförmigen Grundkörper ist nicht so ausgestaltet, dass sich eine Inertgassperrschicht ausbildet, sondern derart, dass sich eine Inertgasströmung in den Behälter etabliert. Dadurch wird keine Inertgassperrschicht durch in den Behälter strömendes Schüttgut verwirbelt, sondern die Aufrechterhaltung der Inertgasatmosphäre im Behälter durch mit dem Schüttgut in den Behälter strömendes Inertgas verbessert. Durch die Möglichkeit des nahezu gasdichten Verschlußes eignet sich die erfindungsgemäße Gasschleuse besonders zum Einsatz bei Behältern mit schwankender Häufigkeit der Befüllvorgänge.

Im Sinne der Erfindung weist das Mittel zum nahezu gasdichten Verschluss der Behälteröffnung die Form eines Kegels auf, dessen Grundfläche mindestens der Grundfläche des zylindermantelförmigen Grundkörpers entspricht. An dem Verschlusskegel werden Mittel angebracht, die zur Einstellung des Spaltes zwischen Verschlusskegel und zylindermantelförmigen Grundkörpers geeignet sind. Der Verschlusskegel wird über ein Düsenrohr mit dem oberen Rand des zylindermantelförmigen Grundkörpers verbunden.

Der Gasauslass besteht aus einer nahezu kegelförmigen Düse am unteren Ende eines Düsenrohres, welche sich direkt über der Spitze des Verschlusskegels befindet.

Vorteilhafterweise wird auf den zylindermantelförmigen Grundkörpers ein konischer Körper in Form eines Mantels eines Kegelstumpfes aufgesetzt. Durch die Kombination des zylindermantelförmigen Grundkörpers mit einem konischen Körper wird ein Einfülltrichter gebildet, der sich einfach mit Schüttgut aller Art füllen lässt.

Besonders bevorzugt wird der Verschlusskegel über ein Düsenrohr und eine Feder mit dem oberen Rand des zylindermantelförmigen Grundkörpers und/oder dem oberen Rand des konischen Körpers verbunden, wobei die Feder vorgespannt ist und den Verschlusskegel spaltlos am unteren Ende des zylindermantelförmigen Grundkörpers positioniert. Dadurch wird der zylindermantelförmige Grundkörper verschlossen.

In dieser Ausgestaltung der Erfindung wird der zylindermantelförmige Grundkörper durch einen Verschlusskegel am unteren Ende verschlossen. Der Verschlusskegel ist über ein Düsenrohr und eine Feder am oberen Rand des zylindermantelförmigen Grundkörpers oder am oberen Rand des konischen Körpers befestigt. In ihrem vorgespannten Zustand positioniert die Feder den Verschlusskegel exakt am unteren Ende des zylindermantelförmigen Grundkörpers. Da der Verschlusskegel eine Grundfläche von mindestens der Größe des zylindermantelförmigen Grundkörpers aufweist, kann sich kein Spalt zwischen Verschlusskegel und zylindermantelförmigen Grundkörper bilden. Der Behälter ist daher nahezu gasdicht verschlossen.

Nachdem die Gasschleuse mit Schüttgut befüllt wurde, wird der Verschlußkegel manuell, pneumatisch oder elektrisch nach unten gedrückt, wodurch sich ein Spalt zwischen dem zylindermantelförmigen Grundkörper und dem Verschlußkegel bildet. Durch diesen Spalt gelangt das Schüttgut zusammen mit dem am Verschlußkegel entlang strömenden Inertgas in den Behälter. Durch die Ausgestaltung des Mittels zum Verschluß der Gasschleuse als Kegel bildet sich nur ein Ringspalt zwischen Verschlußkegel und zylindermantelförmigen Grundkörper. Inertgas und Schüttgut werden dabei durch den Mantel des Verschlußkegel gemeinsam in das Behälterinnere geführt. Die Regulation der in den Behälter strömenden Schüttgut- und Inertgasmenge wird in dieser Ausgestaltung der Erfindung durch die Einstellung der Größe des Ringspaltes gewährleistet. Entsprechend verschließt sich der Behälter durch den Verschlußkegel bei vorgespannter Feder nach der Entleerung des zylindermantelförmigen Grundkörpers automatisch wieder.

Für eine kontinuierliche Befüllung wird ein dauerhafter Spalt zwischen Verschlusskegel und zylindermantelförmigen Grundkörper eingestellt. Dies wird durch eine Blockierung der Feder oder des Verschlußkörpers beispielsweise durch in den Ringspalt geklemmte Abstandshalter erreicht.

Der Gasauslass besteht aus einer nahezu kegelförmigen Düse am unteren Ende eines Düsenrohres, welche befindet sich direkt über der Spitze des Verschlusskegels befindet und vorteilhafterweise Mittel zur Regulation der austretenden Gasmenge aufweist.

Durch die kegelförmige Ausgestaltung des Gasauslasses, dessen Öffnung sich genau über dem Verschlusskegel befindet, tritt das Gas gleichmäßig in alle Richtungen des Verschlusskegels aus. Die kegelförmige Düse sorgt für eine gleichmäßige radiale Verteilung des Inertgases und richtet den Gasaustritt nach unten, entlang der Mantelfläche des Verschlusskegels. Durch diese Ausgestaltung strömt das Inertgas gleichzeitig in die gleiche Richtung wie das Schüttgut und dringt zusammen mit dem Schüttgut in den Behälter ein. Als Mittel zur Regulation der ausströmenden Gasmenge können dabei beispielsweise Unterlegscheiben dienen, welche die Spalthöhe zwischen dem kegelförmigen Auslass der Düse und dem Verschlusskegel definieren.

In einigen Anwendungsfällen hat es sich als zweckmäßig erwiesen, den Ringspalt, der sich zwischen dem zylindermantelförmigen. Grundkörper der Gasschleuse und der Behälteröffnung automatisch ergibt, nicht vollständig zu verschließen, sondern mit Mitteln zur Zu- oder Abführung von Gas zu versehen. Durch diese Ausgestaltung der Erfindung lässt sich eine einfache Regulation der Behälteratmosphäre erreichen. Je nach Bedarf kann zusätzlich Inertgas in dem Behälter eingeleitet oder Überdruck des Behälters abgebaut werden.

Die vorliegende Erfindung beschreibt hauptsächlich Gasschleusen für kreisförmige Behälteröffnungen. Vom Prinzip lässt sie sich aber für den Fachmann auf beliebig geformte Behälteröffnungen erweitern. Beispielsweise im Falle einer rechteckigen Behälteröffnung würde die Gasschleuse auch einen quadermantelförmigen Grundkörper aufweisen und der Verschlusskegel würde in Form einer Pyramide mit rechteckiger Grundfläche ausgeführt werden. Die erfindungsgemäße Gasschleuse eignet sich für alle den Fachmann bekannten Gase wie Stickstoff, Argon, Kohlendioxid oder ähnliche auf den jeweiligen Einsatzzweck angepaßte Gase.

Mit der vorliegenden Erfindung gelingt es insbesondere eine einfach zu bedienende Gasschleuse für einen Behälter mit Schüttgut auszuführen. Durch das erfindungsgemäße Mittel zum nahezu gasdichten Verschluss der Gasschleuse, welches am unteren Ende des zylindermantelförmigen Grundkörpers positioniert wird, kann die Gasschleuse dauerhaft auf den Behälter angebracht werden. Eine kontinuierliche oder diskontinuierliche Befüllung des Behälters in beliebigen Zeitabständen ist nahezu problemlos möglich. Die erfindungsgemäße Ausführung des Mittels zum Verschluss der Gasschleuse am unteren Ende des zylindermantelförmigen Grundkörpers sorgt für die Etablierung eines Inertgasstromes in Richtung des Behälters. Durch das gleichzeitige Einströmen des Inertgase mit dem Schüttgut in den Behälter wird die Aufrechterhaltung der Inertisierung des Behälters deutlich verbessert.

Im Folgenden soll die Erfindung anhand des in der Figur dargestellten Ausführungsbeispiels näher erläutert werden.

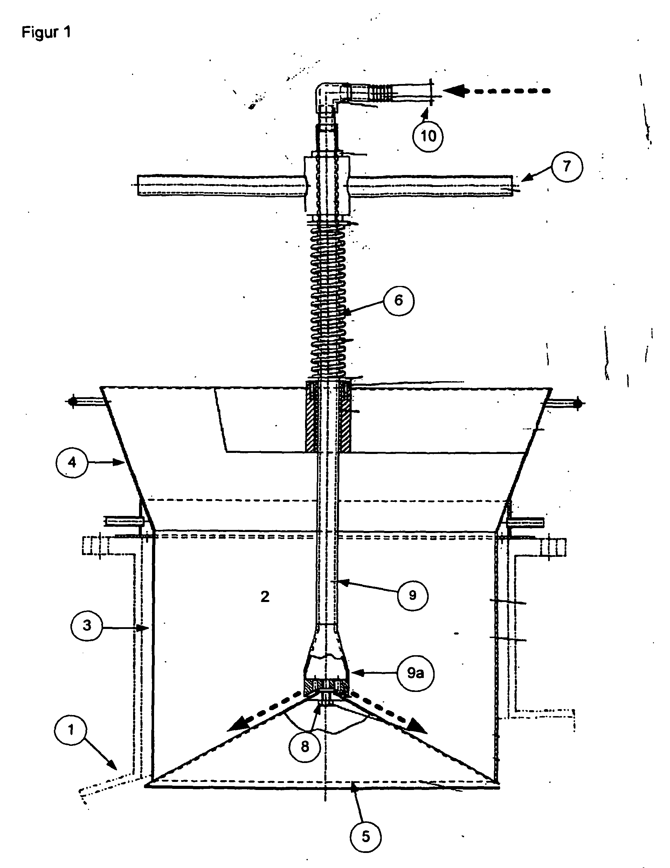

Es zeigt
- Figur 1: ein Ausführungsbeispiel der Erfindung mit einem Verschlusskegel und

Die Gasschleuse (2) wird in die Öffnung des Behälters (1) eingesetzt und verschraubt. Alternativ kann die Gasschleuse (2) auch mit einer Spannvorrichtung befestigt werden. Die Gasschleuse besteht aus einem zylindermantelförmigen Grundkörper (3) und einen darauf aufgesetzten konischen Körper (4). Am unteren Ende des zylindermantelförmigen Grundkörpers befindet sich ein Verschlusskegel (5). Der Verschlusskegel ist über ein Düsenrohr (9) mit dem oberen Rand des konischen Körpers verbunden. Diese Verbindung kann durch beispielsweise drei radiale Streben erfolgen, welche mit dem oberen Rand des konischen Körpers (4) verschweißt werden. Der Gasauslass (8) in Form einer kegelförmigen Düse (9a) am unteren Ende des Düsenrohrs (9) befindet sich genau über der Spitze des Verschlusskegels. Mit der vorgespannten Feder (6) wird der Verschlußkegel (5) nach oben gezogen und verschließt die Gasschleuse (2) nahezu gasdicht. Über den Handgriff (7) kann der Verschlußkegel (5) nach unten gedrückt werden. Bei einer diskontinuierlichen Befüllung des Behälters (1) wird der Einfülltrichter aus zylindermantelförmigen Grundkörper (3) und konischem Körper (4) mit Schüttgut befüllt. Gleichzeitig wird Inertgas über die Zufuhr (10) und den Gasauslass (8) in den Einfülltrichter eingeleitet. Der Behälter (1) ist immer noch durch den Verschlusskegel (5) nahezu gasdicht verschlossen, wobei in dieser Ausgestaltung der Verschlusskegel (5) eine größere Grundfläche als der zylindermantelförmige Grundkörper (3) aufweist. Durch das Drücken des Handgriffes (7) bewegt sich der Verschlußkegel (5) nach unten. Dadurch bildet sich ein Ringspalt zwischen dem Verschlusskegel (5) und dem zylindermantelförmigen Grundkörper (3). Durch diesen Spalt gelangt das Schüttgut zusammen mit dem entlang der Mantelfläche des Verschlusskegels (3) strömenden Inertgas in das Behälterinnere. Die Strömung des Inertgases wird durch die gestrichelten Pfeile symbolisiert. Nach Entleerung des Einfülltrichters (3, 4) zieht die Feder den Verschlusskegel automatisch wieder an das untere Ende des zylindermantelförmigen Grundkörpers (3), so dass sich der Ringspalt zwischen Verschlusskegel (5) und zylindermantelförmigen Grundkörper (3) schließt und der Behälter gasdicht verschlossen ist. Der nächste Befüllzyklus kann beginnen. Für ein kontinuierliches Befüllverfahren müssen lediglich Abstandshalter beispielsweise in Form von Holzklötzen zwischen die Unterkante des zylindermantelförmigen Grundkörpers (2) und den Verschlußkegel (5) gesetzt beziehungsweise verkeilt werden.

## Patentansprüche

1. Gasschleuse (2) mit einem zylindermantelförmigen Grundkörper (3),
einer Gaszuführung (10) und mindestens einem mit der Gaszuführung strömungsseitig verbundenen Gasauslass (8),
wobei die Gasschleuse (2) am unteren Ende des zylindermantelförmigen Grundkörpers (3) Mittel (5) aufweist, die geeignet sind die Behälteröffnung nahezu gasdicht zu verschließen,
wobei das Mittel (5) zum nahezu gasdichten Verschluss der Behälteröffnung die Form eines Kegels aufweist, dessen Grundfläche mindestens der Grundfläche
des zylindermantelförmigen Grundkörpers (3) entspricht,
wobei die Gasschleuse (2) Mittel (6, 7) zur Einstellung Größe des Spaltes zwischen Verschlusskegel (5) und zylindermantelförmigen Grundkörper (3) aufweist,
wobei Verschlusskegel (5) über ein Düsenrohr (9) mit dem oberen Rand des zylinderförmigen Grundkörpers (3) verbunden ist,
und wobei der Gasauslass (8) aus einer nahezu kegelförmigen Düse (9a) am unteren Ende eines Düsenrohres (9) besteht, welche sich direkt über der Spitze des Verschlusskegels (5) befindet.

2. Gasschleuse (2) nach Anspruch 1, **dadurch gekennzeichnet, dass** auf dem zylindermantelförmigen Grundkörper (3) ein konischer Körper (4) in der Form eines Mantels eines Kegelstumpfes aufgesetzt ist.

3. Gasschleuse (2) nach Anspruch 2, **dadurch gekennzeichnet, dass** wobei Verschfusskegel (5) über ein Düsenrohr (9) und eine Feder (6) mit dem oberen Rand des zylinderförmigen Grundkörpers (3) oder dem oberen Rand des konischen Körpers (4) verbunden ist, die Feder (6) vorgespannt ist und den Verschlusskegel (5) spaltlos am unteren Ende des zylindermantelförmigen Grundkörpers (3) positioniert, wodurch der zylindermantelförmige Grundkörper (3) verschlossen wird.

4. Gasschleuse (2) nach einem der Ansprüche 1 bis 3, **dadurch gekennzeichnet, dass** und wobei der Gasauslass (8) aus einer nahezu kegelförmigen Düse (9a) am unteren Ende eines Düsenrohres (9) besteht, welche sich direkt über der Spitze des Verschlusskegels (5) befindet und Mittel zur Regulation der austretenden Gasmenge aufweist.

## Claims

1. Gas lock (2) comprising a main body (3) in the form of a cylindrical casing, a gas feed (10) and at least one gas outlet (8), connected to the gas feed on the flow side, the gas lock (2) having at the lower end of the main body (3) in the form of a cylindrical casing means (5) suitable for closing the container opening in an almost gastight manner, the means (5) for closing the container opening in an almost gastight manner having the form of a cone, the base area of which at least corresponds to the base area of the main body (3) in the form of a cylindrical casing, the gas lock (2) having means (6, 7) for setting the size of the gap between the closure cone (5) and the main body (3) in the form of a cylindrical casing, the closure cone (5) being connected to the upper periphery of the cylindrical main body (3) by way of a nozzle tube (9), and the gas outlet (8) consisting of an almost conical nozzle (9a) at the lower end of a nozzle tube (9), which nozzle is located directly above the tip of the closure cone (5).

2. Gas lock (2) according to Claim 1, **characterized in that** a conical body (4) in the- form of a lateral surface of a truncated cone is placed on the main body (3) in the form of a cylindrical casing.

3. Gas lock (2) according to Claim 2, **characterized in that** the closure cone (5) is connected to the upper periphery of the cylindrical main body (3) or the upper periphery of the conical body (4) by way of a nozzle tube (9) and a spring (6), the spring (6) is prestressed and positions the closure cone (5) without a gap against the lower end of the main body (3) in the form of a cylindrical casing, whereby the main body (3) in the form of a cylindrical casing is closed.

4. Gas lock (2) according to one of Claims 1 to 3, **characterized in that** the gas outlet (8) consists of an almost conical nozzle (9a) at the lower end of a nozzle tube (9), which nozzle is located directly above the tip of the closure cone (5) and has means for regulating the amount of gas emerging.

## Revendications

1. Sas (2) à gaz présentant
un corps de base (3) en forme d'enveloppe cylindrique,
une amenée (10) de gaz et au moins une sortie (8) de gaz reliée à écoulement à l'amenée de gaz,
le sas (2) à gaz présentant à l'extrémité inférieure du corps de base (3) en forme d'enveloppe cylindrique des moyens (5) qui permettent de fermer l'ouverture du récipient de façon pratiquement étanche aux gaz,
les moyens (5) de fermeture pratiquement étanche aux gaz de l'ouverture du récipient présentant la forme d'un cône dont la surface de base correspond au moins à la surface de base du corps de base (3) en forme d'enveloppe cylindrique,
le sas (2) à gaz présentant des moyens (6, 7) d'ajustement de la taille de l'interstice entre le cône de fermeture (5) et le corps de base (3) en forme d'enveloppe cylindrique,
le cône de fermeture (5) étant relié par un tube de tuyère (9) à la bordure supérieure du corps de base (3) de forme cylindrique et
la sortie (8) de gaz étant constituée d'une tuyère (9a) de forme sensiblement conique prévue à l'extrémité intérieure d'un tube de tuyère (9) qui est situé directement au-dessus du sommet du cône de fermeture (5).

2. Sas (2) à gaz selon la revendication 1, **caractérisé en ce qu'**un corps conique (4) qui présente la forme de l'enveloppe d'un tronc de cône est placé sur le corps de base (3) en forme d'enveloppe cylindrique.

3. Sas (2) à gaz selon la revendication 2, **caractérisé en ce que** le cône de fermeture (5) est relié par un tube de tuyère (9) et un ressort (6) à la bordure supérieure du corps de base (3) de forme cylindrique ou à la bordure supérieure du corps conique (4) et **en ce que** le ressort (6) est précontraint et positionne le cône de fermeture (5) sans interstice à l'extrémité inférieure du corps de base (3) en forme d'enveloppe cylindrique, ce qui ferme le corps de base (3) en forme d'enveloppe cylindrique.

4. Sas (2) à gaz selon l'une des revendications 1 à 3, **caractérisé en ce que** la sortie (8) de gaz est constituée d'une tuyère (9a) de forme presque conique disposée à l'extrémité inférieure d'un tube de tuyère (9) qui est situé directement au-dessus du sommet du cône de fermeture (5) et qui présente des moyens de régulation du débit de gaz sortant.
